**Europäisches Patentamt**

**European Patent Office**

**Office européen des brevets**

(19)

(11) Veröffentlichungsnummer : **0 503 387 B1**

(12) # EUROPÄISCHE PATENTSCHRIFT

(45) Veröffentlichungstag der Patentschrift :
**22.12.93 Patentblatt 93/51**

(51) Int. Cl.$^5$ : **C02F 1/02**

(21) Anmeldenummer : **92103344.5**

(22) Anmeldetag : **27.02.92**

(54) **Verfahren zum Abbau von aromatischen Nitroverbindungen enthaltenden Abwässern.**

(30) Priorität : **13.03.91 DE 4107972**

(43) Veröffentlichungstag der Anmeldung :
**16.09.92 Patentblatt 92/38**

(45) Bekanntmachung des Hinweises auf die
Patenterteilung :
**22.12.93 Patentblatt 93/51**

(84) Benannte Vertragsstaaten :
**BE CH DE FR GB IT LI NL**

(56) Entgegenhaltungen :
**EP-A- 0 338 478**
**EP-A- 0 442 088**

(73) Patentinhaber : **BASF Aktiengesellschaft**
**Carl-Bosch-Strasse 38**
**D-67063 Ludwigshafen (DE)**

(72) Erfinder : **Baur, Karl Gerhard, Dr.**
**Ottweiler Strasse 22**
**W-6700 Ludwigshafen (DE)**
Erfinder : **Dockner, Toni, Dr.**
**Grossgasse 6**
**W-6701 Meckenheim (DE)**
Erfinder : **Kanne, Ulrich, Dr.**
**Pierstrasse 9 c**
**W-6710 Frankenthal (DE)**
Erfinder : **Papkalla, Thomas, Dr.**
**D 3,4**
**W-6800 Mannheim 1 (DE)**

EP 0 503 387 B1

## Beschreibung

Die vorliegende Erfindung betrifft ein Verfahren zum Abbau von aromatischen Nitroverbindungen in Abwässern von Anlagen zur Herstellung von Nitrobenzol durch Salpetersäurebehandlung unter Druck.

Aus "Produktionsintegrierter Umweltschutz in der chemischen Industrie", DECHEMA, GVC, SATW, S. 63-64, ist ein Verfahren zur Behandlung von Nitrobenzolabwässern bekannt. Das Abwasser wird über einen Wärmetauscher bei 120 bar Betriebsdruck auf etwa 300°C gebracht und in einen Reaktor gefördert, anschließend abgekühlt und entspannt. Dabei sinkt der Nitrophenol-Gehalt auf unter 10 ppm. Abbau-Produkte der thermischen Zersetzung sind Kohlendioxid sowie Carbon- und Dicarbonsäuren, wie Oxal-, Bernstein- und Benzoesäure. Dieses verfahren ließ jedoch zu wünschen übrig.

Demgemäß wurde ein neues und verbessertes Verfahren zum Abbau von aromatischen Nitroverbindungen in Abwässern von Anlagen zur Herstellung von Nitrobenzol durch Behandlung mit Salpetersäure gefunden, welches dadurch gekennzeichnet ist, daß man bei 180 bis 350°C und einem Druck von 40 bis 150 bar arbeitet.

Das vorliegende Verfahren kann wie folgt durchgeführt werden:

Das Abwasser wird in Druckbehältern bei einer Temperatur von 180 bis 350°C, vorzugsweise 250 bis 290°C, und einem Druck von 40 bis 250 bar, vorzugsweise 70 bis 130 bar, unter Einstellung eines Gehaltes an Salpetersäure von 0,3 bis 10 Gew.-%, vorzugsweise 0,5 bis 5 Gew.-%, durch Zugabe von Salpetersäure eingesetzt. Die zugesetzte Menge Salpetersäure richtet sich zusätzlich nach der Menge an aromatischen Nitroverbindungen im Abwasser.

Als Salpetersäure kann 10 bis 70 gew.-%ige wäßrige Salpetersäure verwendet werden, bevorzugt wird 30 bis 70 gew.-%ige technische wäßrige Salpetersäure.

Als Druckbehälter eignen sich Rohrreaktoren oder in Kaskade geschaltete Autoklaven.

In einer bevorzugten Ausgestaltung wird das Abwasser mit einer Pumpe durch einen Wärmetauscher gefördert, in dem es auf 270°C vorgewärmt wird. Anschließend wird das vorgewärmte Abwasser durch Direkteinspeisung von 100 bar Dampf oder durch eine indirekte Beheizung auf 290°C erhitzt. Nach Einstellung einer Konzentration von z.B. 1,5 % Salpetersäure in dem 290°C heißen Abwasser wird dieses durch einen Reaktor ohne Rückvermischung (z.B. Rohrreaktor mit Einbauten, der mit Titan ausgekleidet ist) gefördert. Nach einer Verweilzeit von 4 bis 8 min wird die Reaktionslösung im Gegenstrom mit dem Feed abgekühlt und entspannt.

Zur kontinuierlichen Ausgestaltung des Verfahrens benutzt man vorzugsweise einen Rohrreaktor, in welchem die Strömung der Flüssigkeit so eingestellt ist, daß eine Rückvermischung unterbleibt.

Mit dem erfindungsgemäßen Verfahren werden vor allem die Abwässer einer Nitrobenzolherstellung gereinigt. Da man jedoch auch Nitrobenzol zur Extraktion von Restmengen Anilin im Abwasser der Anilinerzeugung aus Nitrobenzol verwendet und die so entstehenden Abwässer zusammen der Salpetersäurebehandlung unterwerfen kann, ist im behandlungsbedürftigen Wasser gegebenenfalls auch Anilin in geringen Mengen enthalten. Dieses wird bei dem erfindungsgemäßen Verfahren abgebaut.

Durch Zugabe von geringen Mengen an Salpetersäure zum Abwasser bei der thermischen Behandlung sinkt der Nitrophenol-Gehalt unter 1 ppm bei einem gleichzeitigen TOC-Abbau (TOC = Total Organic Carbon) von > 95 %. Dieses Abwasser kann problemlos in einer biologischen Kläranlage entsorgt werden. Der Vorteil dieser Methode gegenüber der rein thermischen Behandlung des Nitrobenzolabwassers ist der Abbau der Nitrophenole unter 1 ppm und eine wesentliche Verringerung des TOC-Gehaltes. Durch die Salpetersäure-Zugabe werden die Abbauprodukte der Nitrophenole, die Carbon- und Dicarbonsäuren, weitgehend zu Kohlendioxid abgebaut. Des weiteren zeigt diese Methode eine hohe Flexibilität gegenüber schwankenden Abwasserzusammensetzungen. Bei einem höheren Schadstoffanteil muß nur die Menge an Salpetersäure erhöht werden, um die Abwasserwerte einhalten zu können. Dabei ist bemerkenswert, daß auch verdünnte Salpetersäure ein so starkes Oxidationspotential besitzt, daß sie organisch gebundenen Kohlenstoff zu Kohlendioxid oxidiert.

### Beispiel

Ein Abwasser mit der unten angegebenen Zusammensetzung wurde unter folgenden Reaktionsbedingungen in einem Rohrreaktor behandelt:
Reaktionstemperatur: 280 bis 290°C
Druck: 95 bar
Salpetersäurezugabe: 1,5 Gew.-%
Verweilzeit: 5 min.

Analysen:

| A) vor der Behandlung: | | B) nach der Behandlung |
|---|---|---|
| TOC-Gehalt: | 355 mg/l | TOC-Gehalt: 17 mg/l |
| Nitrobenzol: | 2 mg | Nitrobenzol: 6 mg/l |
| 2,6-Dinitrophenol: | 53 mg/l | 2,6-Dinitrophenol: < 100 ppb |
| 2,4-Dinitrophenol: | 485 mg/l | 2,4-Dinitrophenol: < 100 ppb |
| Pikrinsäure: | 117 mg/l | Pikrinsäure: < 50 ppb |

## Patentansprüche

1. Verfahren zum Abbau von aromatischen Nitroverbindungen in Abwässern von Anlagen zur Herstellung von Nitrobenzol durch Behandlung mit Salpetersäure, dadurch gekennzeichnet, daß man bei 180 bis 350°C und einem Druck von 40 bis 250 bar arbeitet.

2. Verfahren nach Anspruch 1, dadurch gekennzeichnet, daß man bei 250 bis 290°C arbeitet.

3. Verfahren nach den Ansprüchen 1 und 2, dadurch gekennzeichnet, daß man bei einem Druck von 70 bis 130 bar arbeitet.

## Claims

1. A process for breaking down aromatic nitro compounds in waste waters from plants for the production of nitrobenzene by treatment with nitric acid, which comprises operating at from 180 to 350°C and under a pressure of from 40 to 250 bar.

2. A process as claimed in claim 1, which is carried out at from 250 to 290°C.

3. A process as claimed in claim 1 or 2, which is carried out under a pressure of from 70 to 130 bar.

## Revendications

1. Procédé de décomposition de composés du type nitro aromatiques dans les eaux résiduaires d'installations de fabrication du nitrobenzène, en recourant à un traitement par de l'acide nitrique, caractérisé en ce que l'on travaille à une température de 180 à 350°C et à une pression de 40 à 250 bars.

2. Procédé suivant la revendication 1, caractérisé en ce que l'on travaille à des températures de 250 à 290°C.

3. Procédé suivant les revendications 1 et 2 caractérisé en ce que l'on travaille à une pression de 70 à 130 bars.